**Europäisches Patentamt**

**European Patent Office**

**Office européen des brevets**

(11) Veröffentlichungsnummer : **0 496 722 A1**

## (12) EUROPÄISCHE PATENTANMELDUNG

(21) Anmeldenummer : **92890014.1**

(22) Anmeldetag : **16.01.92**

(51) Int. Cl.$^5$ : **B23Q 3/154**

(30) Priorität : **16.01.91 AT 90/91**

(43) Veröffentlichungstag der Anmeldung :
**29.07.92 Patentblatt 92/31**

(84) Benannte Vertragsstaaten :
**DE DK ES FR GB GR IT LU MC NL PT SE**

(71) Anmelder : **PETER KHU & Co.**
**Kupferschmiedgasse 16**
**W-2201 Hagenbrunn im Industriegebiet (DE)**

(72) Erfinder : **Khu, Peter**
**Kupferschmiedgasse 16**
**A-2201 Hagenbrunn im Industriegebiet (AT)**

(74) Vertreter : **Klein, Adam, Dipl.Ing. et al**
**Patentanwälte Dipl.Ing. Adam Klein, Dipl.Ing.**
**Rudolf Pinter, Fasangasse 49**
**A-1030 Wien (AT)**

(54) **Magnetspannplatte.**

(57)    Bei einer Magnetspannplatte ist jede Magneteinheit (1) separat auf einem Spannteil (6) angeordnet, welcher gegenüber dem Plattengehäuse (4) beweglich ist. Mittels einer am Plattengehäuse (4) einerseits und am Spannteil (6) andererseits angreifenden Spanneinrichtung (7) ist jede Magneteinheit (1) in ihrer jeweiligen Relativposition festlegbar, sodaß auch das verzugsfreie Einspannen nicht vollständig ebener Oberflächen leicht möglich ist.

Fig. 2

EP 0 496 722 A1

Die Erfindung betrifft eine Magnetspannplatte, insbesondere für plattenförmige, großflächige Werkstücke, mit zumindest einer Magneteinheit, deren Spannfläche in einer an der Oberseite des Plattengehäuses ausgebildeten Plattenspannfläche liegt.

Derartige Spannplatten sind bei der Metallbearbeitung, insbesondere in der Verwendung bei Fräs- oder Schleifmaschinen, bekannt und werden üblicherweise dazu verwendet, Stahlplatten oder dergleichen, die in rohem bzw. gewalztem Zustand angeliefert werden, plan zu bearbeiten. Bekannt sind dabei Ausführungen mit Permanentmagneten, mit Elektromagneten, bzw. auch mit einer Kombination von Elektro- und Permanent-Magneten, wobei letztere den Vorteil der absoluten Spannsicherheit auch bei Stromausfall bieten.

Ein gravierender Nachteil der herkömmlichen Magnetspannplatten liegt darin, daß Grobbleche, die zumeist autogen vorgeschnitten sind, normalerweise mehr oder weniger stark verbogen bzw. verzogen sind und beim Spannen auf der Magnetspannplatte einfach plan gezogen werden. Wenn dann die Planbearbeitung durch Fräsen, Hobeln, Schleifen oder dergleichen durchgeführt wird, wirft sich die einseitig bearbeitete Platte beim Abnehmen von der Spannplatte wieder in ihren verbogenen Urzustand zurück, was das Herstellen von bearbeiteten, planen Stahlplatten oder dergleichen sehr erschwert und oftmals mehrmaliges Umspannen und Umdrehen der Platten während der notwendigen Bearbeitungsschritte erforderlich macht. Man kann sich zwar teilweise durch Unterlegen von passenden Abstandhaltern bei der ersten Planbearbeitung etwas behelfen, jedoch ist damit nur ein sehr unbefriedigender Ausgleich an den außenliegenden Bereichen der zu bearbeitenden Platte möglich.

Aufgabe der vorliegenden Erfindung ist es, eine Magnetspannplatte der eingangs genannten Art so zu verbessern, daß die angesprochenen Nachteile beseitigt werden und daß insbesonders auf einfache Weise eine Berücksichtigung von verbogenen bzw. verzogenen Oberflächen der zu spannenden Werkstücke, insbesonders Bleche und dergleichen, möglich wird.

Dies wird gemäß der vorliegenden Erfindung bei einer Magnetspannplatte der eingangs angesprochenen Art dadurch erreicht, daß jede Magneteinheit separat auf einem Spannteil angeordnet ist, welcher gegenüber dem Plattengehäuse beweglich ist, und daß eine am Plattengehäuse einerseits und am Spannteil andererseits angreifende Spanneinrichtung vorgesehen ist, mittels der jede Magneteinheit in ihrer jeweiligen Relativposition festlegbar ist. Damit kann sich also die bzw. jede Magneteinheit in ihrer Lage und/oder Ausrichtung relativ zum Plattengehäuse verstellen, wodurch auf einfache und spannungsfreie Weise eine Anpassung an gebogene bzw. verzogene Oberflächen des zu spannenden Werkstückes möglich ist. Es ist dabei belanglos, ob diese Anpassung der Magneteinheit bei offener Spanneinrichtung selbsttätig unter Wirkung der magnetischen Anziehung an die zu spannende Oberfläche erfolgt, oder ob von Hand, oder auch mit entsprechenden Antrieben gesteuert, eine Anpassung erfolgt, wonach die Spanneinrichtung die jeweilige Relativposition festlegt. Im zweitgenannten Fall kann auch ein unter Umständen gewünschter Ausgleich bestimmter Verformungen der zu spannenden Oberfläche individuell vorgesehen werden. Nach wie vor kann natürlich durch entsprechendes Festlegen der Magneteinheit(en) auch ein Planziehen von gebogenen bzw. verworfenen Werkstücken wie bei den bisher bekannten Magnetspannplatten vorgenommen werden.

Nach einer bevorzugten Ausgestaltung der Erfindung ist vorgesehen, daß jede Magneteinheit in einer Ausnehmung an der Oberseite des Plattengehäuses mit Spiel geführt ist. Auf diese Weise entsteht einerseits eine relativ geschlossene und leicht sauber zu haltende Oberfläche der Magnetspannplatte und ist andererseits die erforderliche Beweglichkeit der Magneteinheiten auch in Richtung der Ebene der Oberseite des Plattengehäuses sichergestellt.

Das Plattengehäuse weist nach einer weiteren Ausgestaltung der Erfindung mit den Spannteilen zusammenwirkende, feststehende Trageteile auf, an denen die Spanneinrichtung angreift. Diese Trageteile können gemäß den jeweiligen Anforderungen ausgestaltet und positioniert werden, wobei die Art der Befestigung am Plattengehäuse in weiten Grenzen beliebig gewählt werden kann- auch einstückige Ausführungen sind möglich.

Nach einer besonders bevorzugten Ausgestaltung der Erfindung ist für mehrere, in einer Reihe angeordnete Magneteinheiten jeweils ein gemeinsamer, leistenartig durchgehender Trageteil vorgesehen, wobei das Plattengehäuse mehrere derartige, parallel angeordnete Reihen aufweist. Damit ergibt sich trotz Beibehaltung der einzeln verstellbaren Magneteinheiten ein sehr kompakter und bezüglich Herstellung und Montage günstiger Aufbau. Die Größe, Stärke und Anzahl der Magneteinheiten kann leicht auf die Größe der Magnetspannplatte insgesamt abgestimmt und auch auf die zu spannenden Werkstücke optimiert werden.

In weiterer vorteilhafter Ausgestaltung der Erfindung kann auch vorgesehen sein, daß die Spanneinrichtung für alle Spannteile gemeinsam ist, was die Betätigung der Spanneinrichtung bzw. die Handhabung der Magnetspannplatte insgesamt vereinfacht.

In weiterer Ausgestaltung der Erfindung ist vorgesehen, daß die Spanneinrichtung einen außen am Plattengehäuse angelenkten Spannhebel, eine damit verbundene Exzenterwelle und zumindest eine, von der Exzenterwelle verstellbare Spannstange aufweist, und daß auf der Spannstange für jeden zugeordneten

2

Spannteil ein Spannelement vorgesehen ist, das bei Betätigung des Spannhebels den Spannteil gegen das Plattengehäuse bzw. den Trageteil verspannt. Dies ermöglicht eine sehr einfache, robuste und auch hinsichtlich Montage und Wartung günstige Ausführung der Spanneinrichtung, wobei die aufzubringenden Kräfte trotz Sicherstellung einer zuverlässigen Feststellung der Magneteinheiten sehr gering gehalten werden können.

Bei der letztgenannten Ausführung ist eine weitere Ausgestaltung der Erfindung von Vorteil, gemäß welcher jeder Spannteil von der auch den zugehörigen Trageteil durchsetzenden Spannstange in einer erweiterten Ausnehmung durchsetzt wird. Dies sichert auf sehr einfache Weise die in gewissen Grenzen erforderliche Beweglichkeit der Spannteile relativ zu den im wesentlichen gehäusefesten Teilen der Spanneinrichtung.

In bevorzugter Ausgestaltung der Erfindung kann auch vorgesehen sein, daß jeder Spannteil an der dem Spannelement und/oder dem Trageteil zugewandten Fläche ballig ausgeführt ist, womit sich sehr einfach eine in allen Raumrichtungen freie Beweglichkeit der Magneteinheiten realisieren läßt und jede Verstellung beim Betätigen der Spanneinrichtung zur Festlegung der Magneteinheiten vermieden wird.

In weiterer Ausgestaltung der Erfindung kann auch vorgesehen sein, daß jeder Spannteil in zumindest einem geschlitzten Bereich des Plattengehäuses bzw. Trageteiles verschieb- und/oder verdrehbar gehalten und bei Betätigung der Spanneinrichtung in diesem klemmbar ist. Auch damit ergibt sich eine freie Verstellbarkeit der Magneteinheiten relativ zu den feststehenden Teilen der Magnetspannplatte und eine einfache und sichere Möglichkeit zum Festklemmen der jeweiligen Relativstellung beim Betätigen der Spanneinrichtung.

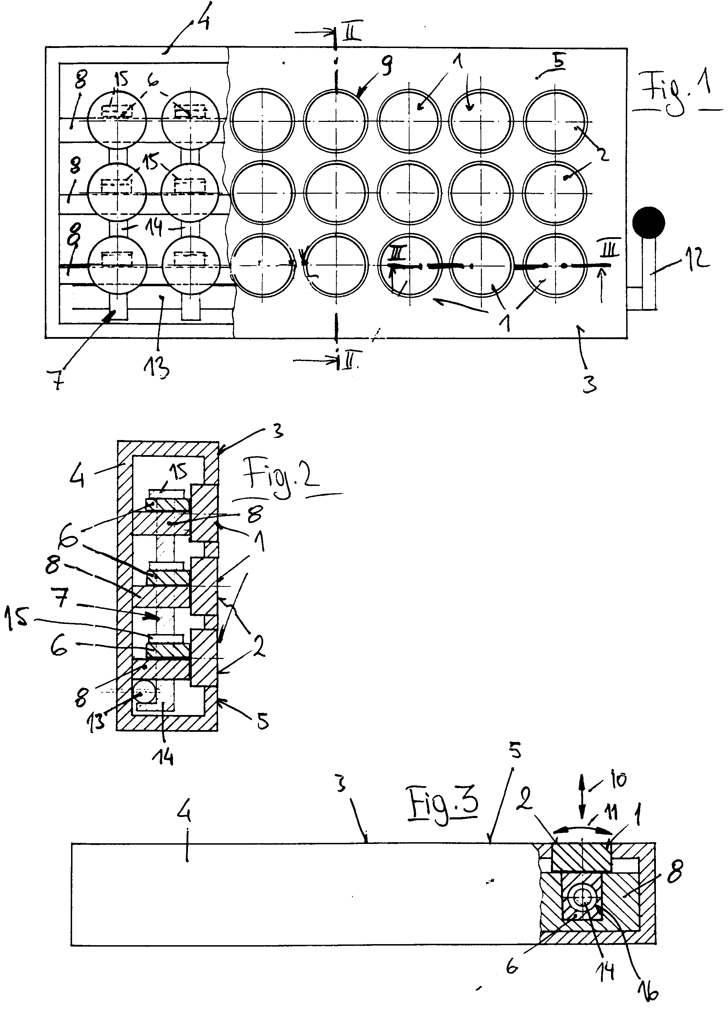

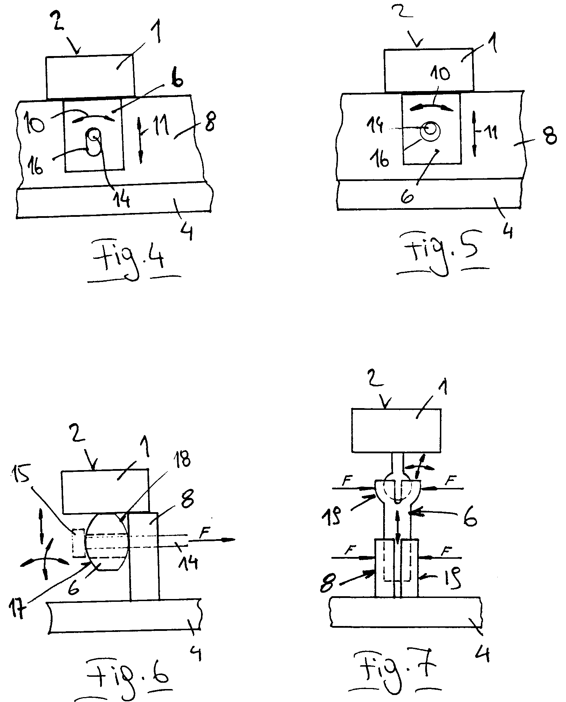

Die Erfindung wird im folgenden noch anhand der in der Zeichnung schematisch dargestellten Ausführungsbeispiele näher erläutert. Es zeigen dabei: Fig. 1 eine teilweise aufgeschnittene Draufsicht auf eine erfindungsgemäße Magnetspannplatte, Fig. 2 einen Schnitt entlang der Linie II-II in Fig. 1, Fig. 3 einen teilweisen Schnitt entlang der Linie III-III in Fig. 1 und die Fig. 4 bis 7 jeweils unterschiedliche Ausführungen in der Schnittführung nach Fig. 3 entsprechenden Teilschnitten.

Die in den Fig. 1 bis 3 dargestellte Magnetspannplatte dient zum Aufspannen insbesondere von plattenförmigen, großflächigen Werkstücken (hier nicht dargestellt), um diese auf Schleifmaschinen, Fräsmaschinen oder dergleichen plan zu bearbeiten. Zum eigentlichen Festspannen ist eine Anzahl von Magneteinheiten 1 vorgesehen, deren Spannfläche 2 jeweils in einer an der Oberseite 3 des Plattengehäuses 4 ausgebildeten Plattenspannfläche 5 liegt.

Jede Magneteinheit 1 ist separat auf einem Spannteil 6 angeordnet, welcher gegenüber dem Plattengehäuse 4 beweglich ist. Weiters ist eine am Plattengehäuse 4 einerseits und am Spannteil 6 andererseits angreifende Spanneinrichtung 7 vorgesehen, mittels der jede Magneteinheit 1 in ihrer jeweiligen Relativposition festlegbar ist. Die Spanneinrichtung 7 ist dabei in der dargestellten Ausführung für alle Spannteile 6 gemeinsam wirkend und greift an am Plattengehäuse feststehenden Trageteilen 8 an, welche mit den Spannteilen 5 zusammenwirken. Dabei ist hier für mehrere, in einer Reihe angeordnete Magneteinheiten 1 jeweils ein gemeinsamer, leistenartig durchgehender Trageteil 8 vorgesehen, wobei das Plattengehäuse 4 mehrere derartige, parallel angeordnete Reihen aufweist.

Jede Magneteinheit 1 ist an der Oberseite 3 des Plattengehäuses 4 in einer Ausnehmung 9 mit Spiel geführt, was aber nur im rechten Bereich der Fig. 1 symbolisch dargestellt ist. Dies ermöglicht eine Bewegung der Magneteinheiten 1 relativ zum Plattengehäuse 4, wie sie beispielsweise in Fig. 3 durch die Pfeile 10, 11 angedeutet ist, womit die Plattenspannfläche 5 insgesamt an eine verbogene bzw. verzogene Oberfläche eines zu spannenden Werkstückes angepaßt werden kann und dann eben nicht mehr plan mit der Oberseite 3 des Plattengehäuses 4 liegt. Es kann dabei einfach bei geöffneter Spannvorrichtung jede Magneteinheit 1 an die zu spannende Oberfläche anziehen gelassen werden, wonach durch Betätigung der Spanneinrichtung die jeweilige Relativposition der Magneteinheiten 1 zum Plattengehäuse 4 festlegbar ist.

Die Spanneinrichtung 7 weist hier einen außen am Plattengehäuse 4 angelenkten Spannhebel 12, eine damit verbundene Exzenterwelle 13 und für im wesentlichen senkrecht zu den Trageteilen 8 verlaufende Reihen von Magneteinheiten 1 jeweils eine, von der Exzenterwelle 13 verstellbare Spannstange 14 auf. Auf jeder Spannstange 14 ist für jeden zugeordneten Spannteil 6 ein Spannelement 15 vorgesehen, das bei Betätigung des Spannhebels 12 den Spannteil 6 gegen das Plattengehäuse 4 bzw. den Trageteil 8 verspannt. Jeder Spannteil 6 ist - wie aus Fig. 3 ersichtlich - von der auch den zugehörigen Trageteil 8 durchsetzenden Spannstange 14 in einer erweiterten Ausnehmung 16 durchsetzt, sodaß die beschriebene Relativbeweglichkeit der Magneteinheiten 1 bei geöffneter Spanneinrichtung 7 nicht behindert wird.

Gemäß Fig. 4 ist die Ausnehmung 16 langlochartig ausgebildet, was die wiederum mit den Pfeilen 10, 11 angedeuteten Verstellmöglichkeiten der Magneteinheit 1 relativ zum Plattengehäuse 4 ergibt.

Gemäß Fig. 5 ist als Abwandlung zur Ausführung nach Fig. 4 lediglich vorgesehen, daß die Ausnehmung 16 - ähnlich wie in Fig. 3 dargestellt - von einer gegenüber der Spannstange 14 vergrößerten Bohrung gebildet ist.

Bei der Ausführung nach Fig. 6 ist vorgesehen, daß der Spannteil 6 an der dem Spannelement 15 und an der dem Trageteil 8 zugewandten Fläche 17, 18 ballig ausgeführt ist, womit sich auf einfache Weise eine zusätzliche Verstellmöglichkeit für die Magneteinheit 1 in einer gegenüber den Fig. 4 und 5 weiteren Dimension ergibt.

Nach Fig. 7 ist schließlich der Spannteil 6 zweiteilig ausgeführt und in geschlitzten Bereichen 19 des Plattengehäuses 4, bzw. Trageteiles 8, bzw. unteren Elementes des Spannteiles 6 selbst, verschieb- bzw. verdrehbar gehalten und bei Betätigung der hier nur durch die Pfeile F angedeuteten Spanneinrichtung in diesen geschlitzten Bereichen 19 klemmbar. Auch damit ergibt sich die beschriebene vorteilhafte Verstellbarkeit der jeweiligen Relativposition jeder Magneteinheit 1.

## Patentansprüche

1. Magnetspannplatte, insbesondere für plattenförmige, großflächige Werkstücke, mit zumindest einer Magneteinheit, deren Spannfläche in einer an der Oberseite des Plattengehäuses ausgebildeten Plattenspannfläche liegt, **dadurch gekennzeichnet**, daß jede Magneteinheit (1) separat auf einem Spannteil (6) angeordnet ist, welcher gegenüber dem Plattengehäuse (4) beweglich ist, und daß eine am Plattengehäuse (4) einerseits und am Spannteil (6) andererseits angreifende Spanneinrichtung (7) vorgesehen ist, mittels der jede Magneteinheit (1) in ihrer jeweiligen Relativposition festlegbar ist.

2. Magnetspannplatte nach Anspruch 1, dadurch gekennzeichnet, daß jede Magneteinheit (1) in einer Ausnehmung (9) an der Oberseite (3) des Plattengehäuses (4) mit Spiel geführt ist.

3. Magnetspannplatte nach Anspruch 1 oder 2, dadurch gekennzeichnet, daß das Plattengehäuse (4) mit den Spannteilen (6) zusammenwirkende, feststehende Trageteile (8) aufweist, an denen die Spanneinrichtung (7) angreift.

4. Magnetspannplatte nach Anspruch 3, dadurch gekennzeichnet, daß für mehrere, in einer Reihe angeordnete Magneteinheiten (1) jeweils ein gemeinsamer, leistenartig durchgehender Trageteil (8) vorgesehen ist, und daß das Plattengehäuse (4) mehrere derartige, parallel angeordnete Reihen aufweist.

5. Magnetspannplatte nach einem der Ansprüche 1 bis 4, dadurch gekennzeichnet, daß die Spanneinrichtung (7) für alle Spannteile (6) gemeinsam ist.

6. Magnetspannplatte nach einem der Ansprüche 1 bis 5, dadurch gekennzeichnet, daß die Spanneinrichtung (7) einen außen am Plattengehäuse (4) angelenkten Spannhebel (12), eine damit verbundene Exzenterwelle (13) und zumindest eine, von der Exzenterwelle (13) verstellbare Spannstange (14) aufweist, und daß auf der Spannstange (14) für jeden zugeordneten Spannteil (6) ein Spannelement (15) vorgesehen ist, das bei Betätigung des Spannhebels (12) den Spannteil (6) gegen das Plattengehäuse (4) bzw. den Trageteil (8) verspannt.

7. Magnetspannplatte nach Anspruch 6, dadurch gekennzeichnet, daß jeder Spannteil (6) von der auch den zugehörigen Trageteil (8) durchsetzenden Spannstange (14) in einer erweiterten Ausnehmung durchsetzt wird.

8. Magnetspannplatte nach Anspruch 6 oder 7, dadurch gekennzeichnet, daß jeder Spannteil (6) an der dem Spannelement (15) und/oder dem Trageteil (8) zugewandten Fläche (17,18) ballig ausgeführt ist.

9. Magnetspannplatte nach Anspruch 6 oder 7, dadurch gekennzeichnet, daß jeder Spannteil (6) in zumindest einem geschlitzten Bereich (19) des Plattengehäuses (4) bzw. Trageteiles (8) verschieb- und/oder verdrehbar gehalten und bei Betätigung der Spanneinrichtung (7) in diesem klemmbar ist.

Fig. 1

Fig. 2

Fig. 3

Fig.4

Fig.5

Fig.6

Fig.7

Europäisches
Patentamt

# EUROPÄISCHER RECHERCHENBERICHT

Nummer der Anmeldung

EP    92 89 0014

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-868 162 (A.A. JONES & SHIPMAN LTD.)<br>* Seite 2, Zeile 50 - Zeile 119 *<br>--- | 1 | B23Q3/154 |
| A | CH-A-331 362 (MARIUS COMINOLI)<br>* Seite 2, Zeile 1 - Zeile 2 *<br>--- | 2 | |
| A | US-A-3 051 875 (WARREN B. FARWELL)<br><br>----- | | |
| | | | **RECHERCHIERTE SACHGEBIETE (Int. Cl.5 )**<br><br>B23Q |

Der vorliegende Recherchenbericht wurde für alle Patentansprüche erstellt

| Recherchenort | Abschlußdatum der Recherche | Prüfer |
|---|---|---|
| DEN HAAG | 24 APRIL 1992 | VANHULLE R. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
························································································
& : Mitglied der gleichen Patentfamilie, übereinstimmendes
    Dokument

EPO FORM 1503 03.82 (P0403)